# EUROPÄISCHE PATENTSCHRIFT

(11) **EP 4 571 176 B1**
(45) Veröffentlichungstag und Bekanntmachung des Hinweises auf die Patenterteilung: **16.09.2026**
(21) Anmeldenummer: 23215632.3
(22) Anmeldetag: 11.12.2023
(51) Int. Cl.: F21S 43/249, B60Q 1/26, B60Q 1/00, B60Q 1/38, F21S 43/14, F21S 43/15, F21S 43/237, F21S 43/245, F21S 43/20, F21S 43/27, F21S 43/31

(54) **BELEUCHTUNGSSYSTEM FÜR EINE FAHRZEUGLEUCHTE**
LIGHTING SYSTEM FOR A VEHICLE LIGHT
SYSTÈME D'ÉCLAIRAGE POUR PHARE DE VÉHICULE

(43) Veröffentlichungstag der Anmeldung: 18.06.2025
(73) Patentinhaber: ZKW Group GmbH, 3250 Wieselburg (AT)
(72) Erfinder: Etlinger, Stefan, 3100 St. Pölten (AT); Wachsenegger, Jürgen, 3281 Oberndorf (AT); Pritzl, Leopold, 3254 Bergland (AT); Guttmann, Bernhard, 4320 Perg (AT); Pfeiffer, Michael, 3213 Frankenfels (AT)
(74) Vertreter: Patentanwaltskanzlei Matschnig & Forsthuber OG

(56) Entgegenhaltungen:
- EP-A1- 4 006 411
- DE-A1- 102013 104 174
- DE-A1- 102014 113 735
- US-A1- 2004 130 904
- US-A1- 2019 293 857

## Beschreibung

### Technisches Gebiet

Die Erfindung betrifft ein Beleuchtungssystem für eine Fahrzeugleuchte, insbesondere für einen Kraftfahrzeugscheinwerfer, wobei das Beleuchtungssystem Folgendes umfasst:
* ein erstes Leuchtmittel, welches dazu eingerichtet ist, Licht entlang einer ersten Lichtabstrahlrichtung abzustrahlen,
* ein zweites Leuchtmittel, umfassend eine Vielzahl von einzeln ansteuerbaren Lichtquellen, wobei die einzelnen Lichtquellen an einem Lichtquellenträger des zweiten Leuchtmittels beanstandet zueinander angeordnet und dazu eingerichtet sind, Licht entlang einer zweiten Lichtabstrahlrichtung, welche von der ersten Lichtabstrahlrichtung unterschiedlich ist, abzustrahlen,
* einen Lichtleiter, insbesondere eine Lichtleitfaser, welcher entlang der zweiten Lichtabstrahlrichtung nach dem zweiten Leuchtmittel angeordnet ist, wobei der Lichtleiter einen ersten Lichteinkoppelabschnitt aufweist, von welchem sich eine den Lichtleiter begrenzende Mantelfläche entlang einer axialen Längsausdehnung des Lichtleiters wegerstreckt, wobei eine Rückseite der Mantelfläche als zweiter Lichteinkoppelabschnitt und eine der Rückseite gegenüberliegende Vorderseite der Mantelfläche als Lichtauskoppelabschnitt ausgestaltet ist,
wobei der Lichtleiter zu dem ersten Leuchtmittel derart angeordnet ist, dass von dem ersten Leuchtmittel abgestrahltes Licht über den ersten Lichteinkoppelabschnitt in den Lichtleiter einkoppelt, wobei sich von dem ersten Leuchtmittel eingekoppeltes Licht innerhalb der Mantelfläche, insbesondere zumindest abschnittsweise, entlang der Längsausdehnung des Lichtleiters axial ausbreitet, wobei der Lichtleiter derart ausgestaltet ist, dass über den ersten Lichteinkoppelabschnitt eingekoppeltes Licht über den Lichtauskoppelabschnitt des Lichtleiters entlang der zweiten Lichtabstrahlrichtung ausgekoppelt wird, wobei der Lichtauskoppelabschnitt, insbesondere die gesamte Vorderseite der Mantelfläche und/oder die gesamte Rückseite der Mantelfläche, diffus streuend ausgebildet ist,
wobei der Lichtleiter zu dem zweiten Leuchtmittel derart angeordnet ist, dass die Längsausdehnung des Lichtleiters im Wesentlichen orthogonal zur zweiten Lichtabstrahlrichtung orientiert ist, der zweite Lichteinkoppelabschnitt der Mantelfläche dem zweiten Leuchtmittel zugewandt und der Lichtauskoppelabschnitt der Mantelfläche dem zweiten Leuchtmittel abgewandt ist.

Die Erfindung betrifft weiters eine Fahrzeugleuchte, beispielsweise einen Kraftfahrzeugscheinwerfer, oder ein Fahrzeug, bevorzugt ein Kraftfahrzeug, umfassend ein Beleuchtungssystem.

### Technischer Hintergrund

Im Stand der Technik sind Beleuchtungssysteme, welche einen Lichtleiter zur Lichtabstrahlung nutzen bekannt. Üblicherweise dient der Lichtleiter zusammen mit einem Leuchtmittel dazu, eine statische (im Sinne von nicht-animiert bzw. ohne Animationseffekt) Lichtfunktion zu erzeugen. Eine dynamische und hochauflösende Lichtfunktion, welche ergänzend oder zusätzlich zur statischen Lichtfunktion erzeugt werden soll, ist bei lichtleiterbasierten Systemen nicht vorgesehen. Bekannterweise wird mit einem weiteren oder zusätzlichen Lichtmodul (bzw. Beleuchtungsvorrichtung) eine dynamische und hochauflösende Lichtfunktion erzeugt. Beispielsweise kann ein statisches Rücklicht eines Kraftfahrzeugs mit einem ersten Lichtmodul, welches einen Lichtleiter aufweist, und ein dynamischer, animierter Fahrtrichtungsanzeiger mit einem zweiten Lichtmodul, welches eine Vielzahl von LEDs aufweist, erzeugt werden. Eine Integration beider Lichtmodule in ein System ist im Stand der Technik nicht vorgesehen, da mit einem Lichtleiter die Erzeugung von animierten und hochauflösenden Lichtfunktionen nicht vorgesehen ist. Die bekannten Lösungen, welche verschiedene Lichtmodule für dynamische/hochauflösende Lichtfunktionen und statische Lichtfunktionen nutzen, sind nachteiligerweise aufwendig, da zwei separate Lichtmodule verwendet werden müssen.

Beispielsweise beschreibt Dokument DE102013104174 eine Fahrzeug-Beleuchtungsvorrichtung mit einem langgestreckten Lichtleiter, der stirnseitig von einer Lichtquelle gespeist wird und entlang seiner Mantelfläche Licht abstrahlt. Zur zusätzlichen Einkopplung von Licht ist zwischen einer Reihe von Lichtquellen, insbesondere LEDs, und dem Lichtleiter mindestens ein langgestrecktes Lichtführungselement vorgesehen, das das von den Lichtquellen abgegebene Licht seitlich in den Lichtleiter einleitet. Durch ein sequenzielles Ansteuern der Lichtquellen kann entlang des Lichtleiters eine wandernde bzw. wischende Lichtwirkung erzeugt werden.

Dokument US 2019/0293857 A1 betrifft eine Beleuchtungsvorrichtung für ein Kraftfahrzeug mit einem stabförmigen Lichtleiter, der an mindestens einem Ende über eine Primärlichtquelle gespeist wird, eine frontseitige Lichtaustrittsfläche und an der Rückseite Entkoppelelemente zur Umlenkung des entlanglaufenden Primärlichts aufweist. Zusätzlich ist mindestens eine Reflektoreinheit mit einer Sekundärlichtquelle und einem elliptischparabolisch geformten Reflektor vorgesehen, die einen bandförmigen Lichtstrom erzeugt, dessen Längsachse im Querschnitt im Wesentlichen parallel zur Längsachse des Lichtleiters verläuft und der an der Rückseite in den Lichtleiter eingekoppelt wird, sodass sich unterschiedliche Lichtfunktionen, insbesondere ein dynamischer fortschreitender Fahrtrichtungsanzeiger durch sequentielles Ansteuern mehrerer Reflektoreinheiten realisieren lassen.

Die Aufgabe der vorliegenden Erfindung besteht darin, die Nachteile des Standes der Technik zu lindern bzw. zu beseitigen. Die Erfindung setzt sich daher insbesondere zum Ziel, ein Beleuchtungssystem zu schaffen, mit welchem hochauflösende, dynamische und statische Lichtfunktionen einfach und mit hoher Homogenität erzeugbar sind.

Diese Aufgabe wird durch ein Beleuchtungssystem mit den Merkmalen von Anspruch 1 gelöst. Bevorzugte Ausführungen sind in den abhängigen Ansprüchen angegeben.

### Kurzdarstellung der Erfindung

Erfindungsgemäß weist das Beleuchtungssystem ein Lichtleitkanalelement auf, welches zwischen dem zweiten Leuchtmittel und der Rückseite der Mantelfläche angeordnet ist, wobei das Lichtleitkanalelement eine Vielzahl von nebeneinander angeordneten Lichtleitkanälen aufweist, welche an dem zweiten Lichteinkoppelabschnitt der Mantelfläche münden, wobei jeder Lichtquelle des zweiten Leuchtmittels ein Lichtleitkanal derart zugeordnet ist, dass Licht einer Lichtquelle über einen Lichteintrittsbereich des der Lichtquelle zugeordneten Lichtleitkanals in diesen eintritt und über einen Lichtaustrittsbereich des Lichtleitkanals aus dem Lichtleitkanal austritt, wobei das Lichtleitkanalelement zu der Rückseite der Mantelfläche derart angeordnet ist, dass jedem Lichtaustrittsbereich ein Teilbereich des zweiten Lichteinkoppelabschnitts zugeordnet ist, sodass Licht, welches aus einem Lichtaustrittsbereich eines bestimmten Lichtleitkanals austritt, auf jenen Teilbereich des zweiten Lichteinkoppelabschnitts trifft, welcher dem Lichtaustrittsbereich des entsprechenden Lichtleitkanals zugeordnet ist,
wobei über die Teilbereiche des zweiten Lichteinkoppelabschnitts eingekoppeltes Licht radial durch den Lichtleiter durchtritt und über den Lichtauskoppelabschnitt des Lichtleiters entlang der zweiten Lichtabstrahlrichtung auskoppelt,
wobei jeder Lichtleitkanal aus einer den Lichtleitkanal begrenzenden Wandung gebildet ist, welche sich zwischen dem Lichteintrittsbereich und dem Lichtaustrittsbereich entlang der zweiten Lichtabstrahlrichtung, vorzugweise trichterförmig, erstreckt, wobei die Wandung Seitenflächen aufweist, welche derart ausgestaltet sind, dass ein von einer Lichtquelle des zweiten Leuchtmittels in den Lichtleitkanal eintretendes Lichtbündel, durch Reflexion oder Streuung an Seitenflächen, in einer ersten, horizontalen Ebene, welche parallel zur axialen Längsausdehnung des Lichtleiters orientiert ist, am Lichtaustrittsbereich breiter ist als am Lichteintrittsbereich,
und, dass ein von einer Lichtquelle des zweiten Leuchtmittels in den Lichtleitkanal eintretendes Lichtbündel, durch Reflexion oder Streuung an Seitenflächen, in einer zweiten Ebene, welche orthogonal zur ersten Ebene und orthogonal zur axialen Längsausdehnung des Lichtleiters orientiert ist, am Lichtaustrittsbereich schmäler ist als am Lichteintrittsbereich.

Dadurch ergibt sich der Vorteil, dass das Licht des zweiten Lichtmittels durch das Lichtleitkanalelement (bzw. beim Durchtritt durch die Lichtleitkanäle des Lichtleitkanalelements) auf die zweite Lichteinkoppelfläche in der ersten Ebene verbreitert und in der zweiten gebündelt wird. Somit kann einerseits eine hohe Lichtmenge auf die zweite Lichteinkoppelfläche gelangen und andererseits ein möglichst homogenes Abstrahlverhalten zwischen benachbarten Abschnitten der Lichteinkoppelfläche (welche von Licht aus benachbarten Lichtleitkanälen beleuchtet werden) erreicht werden. Somit kann eine erste, statische Lichtfunktion mit dem ersten Leuchtmittel und dem Lichtleiter erzeugt werden und gleichzeitig eine zweite, hochauflösende und/oder dynamische Lichtfunktion mit dem zweiten Leuchtmittel, welches den Lichtleiter radial durchstrahlt, erzeugt werden. Bevorzugt ist zwischen zwei benachbarten Lichtquellen des zweiten Leuchtmittels ein Abstand von 10 bis 50 mm, bevorzugt 15 bis 45 mm, insbesondere 20 bis 40 mm. Die zweiten Lichtquellen sind vorzugsweise entlang der gesamten axialen Längsausdehnung des Lichtleiters angeordnet. Insbesondere wird der Lichtleiter mit dem Licht des ersten Leuchtmittels axial und gleichzeitig mit dem Licht des zweiten Leuchtmittels radial durchleuchtet.

Es kann vorgesehen sein, dass die Wandung zumindest vier Seitenflächen aufweist, wobei sich jeweils zwei Seitenflächen paarweise gegenüberliegen, wobei ein erstes Seitenflächenpaar, welches aus zwei Seitenflächen gebildet ist, welche entlang der axialen Längsausdehnung des Lichtleiters beabstandet zueinander angeordnet sind, entlang der zweiten Lichtausbreitungsrichtung divergierend auseinander verlaufen, wobei ein zweites Seitenflächenpaar, welches aus zwei Seitenflächen gebildet ist, welche entlang einer zur axialen Längsausdehnung orthogonalen radialen Richtung des Lichtleiters beabstandet zueinander angeordnet sind, entlang der zweiten Lichtausbreitungsrichtung konvergierend zueinander verlaufen.

Es kann vorgesehen sein, dass das Beleuchtungssystem eine Abschlussscheibe aufweist, welche entlang der zweiten Lichtabstrahlrichtung nach dem Lichtleitkanalelement und vorzugsweise nach dem Lichtleiter angeordnet ist, wobei bevorzugt die Abschlussscheibe einen Halteabschnitt aufweist, an welchem der Lichtleiter befestigt ist.

Es kann vorgesehen sein, dass das Beleuchtungssystem eine Abschlussscheibe aufweist, welche entlang der zweiten Lichtabstrahlrichtung nach dem Lichtleitkanalelement und vorzugsweise nach dem Lichtleiter angeordnet ist, wobei die Abschlussscheibe einen für das Licht des ersten Leuchtmittels und des zweiten Leuchtmittels transparent Bereich aufweist, welcher von einem für das Licht des ersten Leuchtmittels und des zweiten Leuchtmittels intransparenten Bereich umgeben ist, wobei die Abschlussscheibe zu dem Lichtleitkanalelement und dem Lichtleiter derart angeordnet ist, dass Licht, welches aus dem Lichtauskoppelabschnitt des Lichtleiters auskoppelt, bevorzugt ausschließlich, durch den transparenten Bereich der Abschlussscheibe durchtritt.

Es kann vorgesehen sein, dass die Lichtquellen an dem Lichtquellenträger entlang einer imaginären Linie angeordnet sind und damit eine Lichtquellen-Reihe ausbilden, wobei vorzugsweise die Lichtquellen-Reihe der axialen Längsausdehnung des Lichtleiters folgt.

Es kann vorgesehen sein, dass der Lichtleiter im Wesentlichen zylinderförmig ausgestaltet ist, wobei der erste Lichteinkoppelabschnitt an einer Grundfläche des zylinderförmigen Lichtleiters und der zweite Lichteinkoppelabschnitt und der Lichtauskoppelabschnitt an einem Zylindermantel, insbesondere an gegenüberliegenden Seiten eines Zylindermantels, des zylinderförmigen Lichtleiters ausgebildet ist.

Es kann vorgesehen sein, dass der Lichtleiter und das erste Leuchtmittel dazu eingerichtet sind, ein Tagfahrlicht zu erzeugen.

Es kann vorgesehen sein, dass der Lichtleiter und die Vielzahl der Lichtquellen des zweiten Leuchtmittels dazu eingerichtet sind, ein, insbesondere dynamisches, Signallicht, beispielsweise einen Fahrrichtungsanzeiger oder ein Blinklicht mit einen Lauflichteffekt, zu erzeugen.

Es kann vorgesehen sein, dass sich Licht, welches von dem ersten Leuchtmittel in den Lichtleiter eingekoppelt wird, innerhalb des Lichtleiters mittels Totalreflexion an der Mantelfläche entlang der Längsausdehnung des Lichtleiters ausbreitet.

Es kann vorgesehen sein, dass das erste Leuchtmittel zu dem zweiten Leuchtmittel derart angeordnet ist, dass die erste Lichtabstrahlrichtung orthogonal zur zweiten Lichtabstrahlrichtung orientiert ist.

Es kann vorgesehen sein, dass das Lichtleitkanalelement derart ausgestaltet ist, dass aus den Lichtleitkanälen ausgekoppeltes Licht den gesamten zweiten Lichteinkoppelbereich der Mantelfläche beleuchtet, wobei vorzugsweise das Lichtleitkanalelement als Lichtleit-Blende ausgestaltet ist.

Es kann vorgesehen sein, dass das erste Seitenflächenpaar und/oder das zweite Seitenflächenpaar eine für Licht des zweiten Leuchtmittels diffus streuend ausgebildete Oberfläche aufweisen, wobei vorzugsweise das erste Seitenflächenpaar und/oder das zweite Seitenflächenpaar eine diffus streuende Beschichtung und/oder weiß-matt bzw. weiß-opak ausgestaltet ist, oder, wobei das erste Seitenflächenpaar und/oder das zweite Seitenflächenpaar für Licht des zweiten Leuchtmittels, bevorzugt diffus, reflektierend ausgestaltet ist, und insbesondere eine, bevorzugt diffus, reflektierende Beschichtung, beispielsweise eine metallische Beschichtung, aufweist.

Es kann vorgesehen sein, dass das Lichtleitkanalelement derart ausgestaltet ist, dass Licht, welches aus zwei benachbarten Lichtleitkanälen ausgekoppelt wird, an dem zweiten Lichteinkoppelabschnitt überlappungsfrei auftrifft.

Es kann vorgesehen sein, dass sich über die Teilbereiche des zweiten Lichteinkoppelabschnitts eingekoppeltes Licht des zweiten Leuchtmittels mit jenem Licht, welches von dem ersten Leuchtmittel über den ersten Lichteinkoppelbereich in den Lichtleiter radial eingekoppelt wird, nach dem Auskoppeln über den Lichtauskoppelabschnitt entlang der zweiten Lichtabstrahlrichtung überlagert.

Es kann vorgesehen sein, dass das Lichtleitkanalelement einen Befestigungsabschnitt aufweist, an welchem der Lichtleiter befestigt ist. Der Befestigungsabschnitt kann trichterförmig oder kegelstumpfförmig ausgestaltet sein, insbesondere kann der Befestigungsabschnitt in einer Schnitteben, welche parallel zur zweiten Ebene orientiert ist, trapezförmig ausgestaltet sein, oder der Befestigungsabschnitt kann entlang der axialen Längsausdehnung des Lichtleiters grabenförmig ausgestaltet sein. Der Lichtleiter kann innerhalb einer sich verjüngenden Trichteröffnung des Befestigungsabschnitts liegen bzw. dort gehalten werden. Der Befestigungsabschnitt kann entlang der zweiten Lichtabstrahlrichtung nach den Lichtaustrittsbereichen der Lichtleitkanäle, und bevorzugt vor einer Abschlussscheibe, angeordnet sein. Bevorzugt ist eine Basis (die längere Grundseite) des trapezförmigen Befestigungsabschnitts dem zweiten Leuchtmittel ferner (bzw. abgewandt) und die der Basis gegenüberliegende kürzere Grundseite des trapezförmigen Befestigungsabschnitts dem Leuchtmittel näher (bzw. zugewandt), wobei vorzugsweise die Basis des trapezförmigen Befestigungsabschnitts kürzer ist als der Durchmesser des Lichtleiters.

Es kann vorgesehen sein, dass die einen Lichtleitkanal begrenzende Wandung einen Hohlraum begrenzt, durch welchen das Licht der dem Lichtleitkanal zugeordneten Lichtquelle durchtritt.

Es kann vorgesehen sein, dass der Hohlraum frei von optisch aktiven Elementen, beispielsweise eine oder mehrere Linsen, Lichtleitfasern oder Lichtleitoptiken, ist.

Es kann eine Fahrzeugleuchte, beispielsweise ein Kraftfahrzeugscheinwerfer, oder ein Fahrzeug, vorgesehen sein, umfassend ein Beleuchtungssystem.

Im Rahmen dieser Beschreibung sind die Begriffe "oben", "unten", "horizontal", "vertikal" als Angaben der Ausrichtung zu verstehen, wenn das Beleuchtungssystem in normaler Benutzungsstellung angeordnet ist, nachdem es in einem Kraftfahrzeug oder einem Kraftfahrzeugscheinwerfer eingebaut wurde.

### Kurzbeschreibung der Figuren

Nachfolgend wird die Erfindung anhand von schematischen Zeichnungen eines Ausführungsbeispiels näher erläutert. Hierbei zeigt
Fig. 1 eine schematische Ansicht eines erfindungsgemäßen Beleuchtungssystems;
Fig. 2 eine Schnittansicht des Beleuchtungssystems gemäß Fig. 1; und
Fig. 3 eine Rückansicht des Beleuchtungssystems gemäß Fig. 1.

### Eingehende Beschreibung der Ausführungsformen

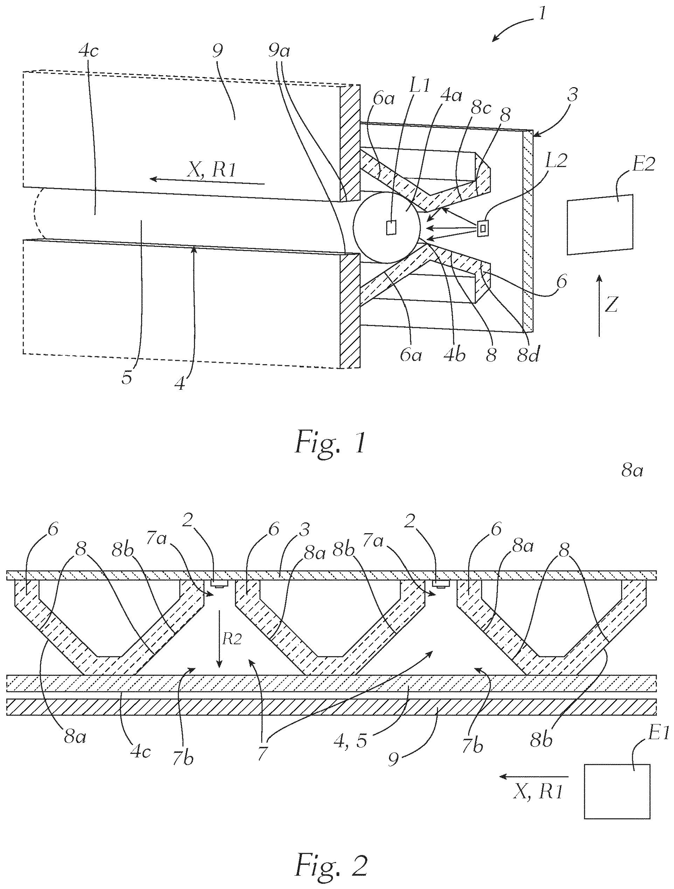

Fig. 1 zeigt ein erfindungsgemäßes Ausführungsbeispiel eines Beleuchtungssystems 1 für eine Fahrzeugleuchte, wobei die Fahrzeugleuchte beispielsweise ein Kraftfahrzeugscheinwerfer, eine Komponente eines Kraftfahrzeugscheinwerfers, oder eine Signalleuchte für ein Kraftfahrzeug sein kann.

Fig. 2 zeigt eine Draufsicht auf einen Schnitt durch das in Fig. 1 gezeigte Beleuchtungssystem, wobei der Schnitt durch eine, in der Blattebene von Fig. 1, horizontale Schnittebene erfolgt.

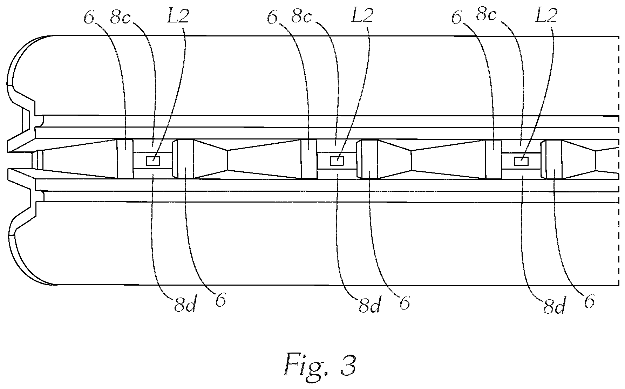

Fig. 3 zeigt eine Rückansicht auf das in Fig. 1 gezeigte Beleuchtungssystem.

Das Beleuchtungssystem 1 umfasst ein erstes Leuchtmittel L1, welches dazu eingerichtet ist, Licht entlang einer ersten Lichtabstrahlrichtung R1 abzustrahlen.

Das Beleuchtungssystem 1 umfasst weiters ein zweites Leuchtmittel L2, welches eine Vielzahl von einzeln ansteuerbaren Lichtquellen 2 aufweist. Die einzelnen Lichtquellen 2 sind an einem Lichtquellenträger 3 (beispielsweise eine flexible Leiterplatte) des zweiten Leuchtmittels L2 beanstandet zueinander angeordnet und dazu eingerichtet, Licht entlang einer zweiten Lichtabstrahlrichtung R2 (vgl. Fig. 2), welche von der ersten Lichtabstrahlrichtung R1 unterschiedlich ist, abzustrahlen.

In dem gezeigten Ausführungsbeispiel ist das erste Leuchtmittel L1 zu dem zweiten Leuchtmittel L2 derart angeordnet, dass die erste Lichtabstrahlrichtung R1 orthogonal zur zweiten Lichtabstrahlrichtung R2 orientiert ist. Die Schnittebene, der in Fig. 2 gezeigten Schnittansicht, liegt parallel zur zweiten Lichtabstrahlrichtung R2 und schneidet die Lichtquellen 2 des zweiten Leuchtmittels L2.

Das Beleuchtungssystem 1 umfasst einen Lichtleiter 4, beispielsweise eine Lichtleitfaser, welcher entlang der zweiten Lichtabstrahlrichtung R2 nach dem zweiten Leuchtmittel L2 angeordnet ist. Der Lichtleiter 4 weist einen ersten Lichteinkoppelabschnitt 4a auf, von welchem sich eine den Lichtleiter begrenzende Mantelfläche 5 entlang einer axialen Längsausdehnung x des Lichtleiters 4 wegerstreckt. Eine Rückseite der Mantelfläche 5 (die dem zweiten Leuchtmittel L2 zugewandt ist) ist als zweiter Lichteinkoppelabschnitt 4b und eine der Rückseite gegenüberliegende Vorderseite der Mantelfläche 5 (die dem zweiten Leuchtmittel L2 abgewandt ist) ist als Lichtauskoppelabschnitt 4c ausgestaltet.

Der Lichtleiter 4 ist zu dem ersten Leuchtmittel L1 derart angeordnet, dass von dem ersten Leuchtmittel L1 abgestrahltes Licht über den ersten Lichteinkoppelabschnitt 4a in den Lichtleiter 4 eingekoppelt wird. Von dem ersten Leuchtmittel L1 eingekoppeltes Licht breitet sich innerhalb der Mantelfläche 5, insbesondere zumindest abschnittsweise, entlang der Längsausdehnung x des Lichtleiters 4 axial aus. Licht, welches von dem ersten Leuchtmittel L1 in den Lichtleiter 4 eingekoppelt wird, kann sich innerhalb des Lichtleiters 4 mittels Totalreflexion an der Mantelfläche 5 entlang der Längsausdehnung x des Lichtleiters 4 ausbreiten. Der Lichtleiter 4 ist derart ausgestaltet, dass über den ersten Lichteinkoppelabschnitt 4a eingekoppeltes Licht über den Lichtauskoppelabschnitt 4c des Lichtleiters 4 entlang der zweiten Lichtabstrahlrichtung R2 ausgekoppelt wird. Hierfür sind beispielsweise Umlenkprismen an der Innenseite der Rückseite der Mantelfläche vorgesehen, welche das eingekoppelte Licht zum Lichtauskoppelabschnitt 4c hin umlenken. Der Lichtauskoppelabschnitt 4c, insbesondere die gesamte Vorderseite der Mantelfläche 5 und/oder die gesamte Rückseite der Mantelfläche 5, ist bzw. sind diffus streuend ausgebildet. Dies bedeutet, dass das Licht nach dem Auskoppeln aus dem Lichtleiter 4 keine ausgezeichnete Richtung aufweist bzw. nicht alle Lichtstrahlen parallel zueinander orientiert sind, sondern beispielsweise um die zweite Lichtabstrahlrichtung R2 herum einen Lichtabstrahlkegel bilden bzw. sich im Raum divergent ausbreiten. Das Lichtabstrahlverhalten des Lichtleiters 4 kann beispielsweise mit dem Abstrahlverhalten eines Diffusors oder eines Lambert-Strahlers angenähert werden.

Der Lichtleiter 4 ist weiters zu dem zweiten Leuchtmittel L2 derart angeordnet, dass die Längsausdehnung x des Lichtleiters 4 im Wesentlichen orthogonal zur zweiten Lichtabstrahlrichtung R2 orientiert ist (vgl. Fig. 2). Der zweite Lichteinkoppelabschnitt 4b der Mantelfläche 5 ist dem zweiten Leuchtmittel L2 zugewandt und der Lichtauskoppelabschnitt 4c der Mantelfläche 5 ist wiederum dem zweiten Leuchtmittel L2 abgewandt. In dem gezeigten Ausführungsbeispiel ist der Lichtleiter 4 im Wesentlichen zylinderförmig ausgestaltet. Der erste Lichteinkoppelabschnitt 4a ist an einer Grundfläche des zylinderförmigen Lichtleiters und der zweite Lichteinkoppelabschnitt 4b und der Lichtauskoppelabschnitt 4c sind an einem Zylindermantel, insbesondere an gegenüberliegenden Seiten eines Zylindermantels, des zylinderförmigen Lichtleiters 4 ausgebildet. Der Lichtleiter 4 und das erste Leuchtmittel L1 können dazu eingerichtet sein, ein Tagfahrlicht zu erzeugen.

In dem gezeigten Ausführungsbeispiel sind die Lichtquellen 2 an dem Lichtquellenträger 3 entlang einer imaginären Linie angeordnet sind und bilden damit eine Lichtquellen-Reihe aus. Die Lichtquellen-Reihe folgt der axialen Längsausdehnung x des Lichtleiters 4, wobei zwischen zwei Lichtquellen ein Abstand von mehr als 0 mm, insbesondere ein Abstand zwischen 10 mm und 50 mm, vorgesehen ist. Der Lichtleiter 4 und die Vielzahl der Lichtquellen 2 des zweiten Leuchtmittels L2 können beispielsweise dazu eingerichtet sein, ein, insbesondere dynamisches, Signallicht, beispielsweise einen Fahrrichtungsanzeiger oder ein Blinklicht mit einen Lauflichteffekt, zu erzeugen. Dadurch, dass die Lichtquellen 2 einzeln ansteuerbar sind, kann, beispielsweise durch sukzessives Einschalten benachbarter Lichtquellen 2, ein Lauflicht-Effekt erzeugt werden.

Das Beleuchtungssystem 1 umfasst ein Lichtleitkanalelement 6, welches zwischen dem zweiten Leuchtmittel L2 und der Rückseite der Mantelfläche 5 angeordnet ist. Das Lichtleitkanalelement 6 hat eine Vielzahl von nebeneinander angeordneten Lichtleitkanälen 7, die jeweils an dem zweiten Lichteinkoppelabschnitt 4b der Mantelfläche 5 münden.

Wie in Fig. 2 erkennbar, ist jeder Lichtquelle 2 des zweiten Leuchtmittels L2 ein Lichtleitkanal 7 zugeordnet. Licht einer bestimmten Lichtquelle 2 tritt über einen Lichteintrittsbereich 7a des ihr zugeordneten Lichtleitkanals 7 in diesen ein. Am Ende des Lichtleitkanals 7 tritt das Licht über einen Lichtaustrittsbereich 7b des Lichtleitkanals 7 aus diesem wieder aus. Das Lichtleitkanalelement 6 ist zu der Rückseite der Mantelfläche 5 derart angeordnet, dass jedem Lichtaustrittsbereich 7b ein Teilbereich des zweiten Lichteinkoppelabschnitts 4b zugeordnet ist. Damit kann Licht, welches aus einem Lichtaustrittsbereich 7b eines bestimmten Lichtleitkanals 7 austritt, auf jenen Teilbereich des zweiten Lichteinkoppelabschnitts 4b treffen, welcher dem Lichtaustrittsbereich 7b des entsprechenden Lichtleitkanals 7 zugeordnet ist. Über die Teilbereiche des zweiten Lichteinkoppelabschnitts 4b eingekoppeltes Licht tritt durch den Lichtleiter 4 radial durch und wird danach über den Lichtauskoppelabschnitt 4c des Lichtleiters 4 entlang der zweiten Lichtabstrahlrichtung R2 ausgekoppelt.

Das Lichtleitkanalelement 6 ist in dem gezeigten Ausführungsbeispiel derart ausgestaltet, dass aus den Lichtleitkanälen 7 ausgekoppeltes Licht den gesamten zweiten Lichteinkoppelbereich 4b der Mantelfläche 5 beleuchtet, wobei vorzugsweise das Lichtleitkanalelement 6 als Lichtleit-Blende ausgestaltet ist. Weiters ist in dem gezeigten Ausführungsbeispiel das Lichtleitkanalelement 6 derart ausgestaltet, dass Licht, welches aus zwei benachbarten Lichtleitkanälen 7 ausgekoppelt wird, an dem zweiten Lichteinkoppelabschnitt 4b überlappungsfrei auftrifft. Über die Teilbereiche des zweiten Lichteinkoppelabschnitts 7b eingekoppeltes Licht kann sich mit jenem Licht, welches von dem ersten Leuchtmittel L1 über den ersten Lichteinkoppelbereich 4a in den Lichtleiter 4 radial eingekoppelt wird, nach dem Auskoppeln über den Lichtauskoppelabschnitt 4c entlang der zweiten Lichtabstrahlrichtung R2 überlagern. Abhängig vom (Ein/Aus) Betriebszustand des ersten Leuchtmittels L1 und des zweiten Leuchtmittels L2, kann nur Licht des ersten Leuchtmittels L1, nur Licht des zweiten Leuchtmittels L2, oder ein Gesamtlicht aus dem ersten Leuchtmittel L1 und dem zweiten Leuchtmittel L2 aus dem Lichtleiter 4 ausgekoppelt werden.

Jeder Lichtleitkanal 7 umfasst eine den Lichtleitkanal 7 begrenzende Wandung 8. Diese erstreckt sich, beispielsweise trichterförmig, zwischen dem Lichteintrittsbereich 7a und dem Lichtaustrittsbereich 7b entlang der zweiten Lichtabstrahlrichtung R2. Die Wandung 8 kann einen Hohlraum begrenzen, durch welchen das Licht der dem Lichtleitkanal 7 zugeordneten Lichtquelle 2 durchtritt. Der Hohlraum kann frei von optisch aktiven Elementen, beispielsweise eine oder mehrere Linsen, Lichtleitfasern oder Lichtleitoptiken, sein.

Die Wandung 8 hat Seitenflächen 8a, 8b, 8c, 8d, welche einerseits derart ausgestaltet sind, dass ein von einer Lichtquelle 2 des zweiten Leuchtmittels L2 in den Lichtleitkanal 7 eintretendes Lichtbündel, durch Reflexion oder Streuung an Seitenflächen 8a, 8b, in einer ersten Ebene E1, welche parallel zur axialen Längsausdehnung x des Lichtleiters 4 orientiert ist, am Lichtaustrittsbereich 7b breiter ist als am Lichteintrittsbereich 7a.

Andererseits sind die Seitenflächen 8a, 8b, 8c, 8d derart ausgestaltet, dass ein von einer Lichtquelle 2 des zweiten Leuchtmittels L2 in den Lichtleitkanal 7 eintretendes Lichtbündel, durch Reflexion oder Streuung an Seitenflächen 8c, 8d, in einer zweiten Ebene E2, welche orthogonal zur ersten Ebene E1 und orthogonal zur axialen Längsausdehnung x des Lichtleiters 4 orientiert ist, am Lichtaustrittsbereich 7b schmäler ist als am Lichteintrittsbereich 7a.

Wie in Fig. 2 erkennbar, umfasst die Wandung 8 zumindest vier Seitenflächen 8a, 8b, 8c, 8d, wobei sich jeweils zwei Seitenflächen paarweise gegenüberliegen.

Ein erstes Seitenflächenpaar, welches aus zwei Seitenflächen 8a, 8b gebildet ist, welche entlang der axialen Längsausdehnung x des Lichtleiters 4 beabstandet zueinander angeordnet sind, verläuft entlang der zweiten Lichtausbreitungsrichtung R2 divergierend auseinander.

Ein zweites Seitenflächenpaar, welches aus zwei Seitenflächen 8c, 8d (vgl. Fig. 1 und Fig. 3) gebildet ist, welche entlang einer zur axialen Längsausdehnung x orthogonalen radialen Richtung z des Lichtleiters 4 beabstandet zueinander angeordnet sind, verläuft entlang der zweiten Lichtausbreitungsrichtung R2 konvergierend zueinander.

Das erste Seitenflächenpaar 8a, 8b und/oder das zweite Seitenflächenpaar 8c, 8d können eine für Licht des zweiten Leuchtmittels L2 diffus streuend ausgebildete Oberfläche aufweisen. Das erste Seitenflächenpaar 8a, 8b und/oder das zweite Seitenflächenpaar 8c, 8d können eine diffus streuende Beschichtung aufweisen und/oder weiß-matt bzw. weiß-opak ausgestaltet sein. Das erste Seitenflächenpaar (8a, 8b) und/oder das zweite Seitenflächenpaar (8c, 8d) können auch für Licht des zweiten Leuchtmittels L2, bevorzugt diffus, reflektierend ausgestaltet sein, und können insbesondere eine, bevorzugt diffus, reflektierende Beschichtung, beispielsweise eine metallische Beschichtung, aufweisen.

Das Beleuchtungssystem kann eine (optionale) Abschlussscheibe 9 aufweisen, welche entlang der zweiten Lichtabstrahlrichtung R2 nach dem Lichtleitkanalelement 6 und vorzugsweise nach dem Lichtleiter 4 angeordnet ist. Die Abschlussscheibe 9 kann einen Halteabschnitt 9a aufweisen, an welchem der Lichtleiter 4 befestigt ist oder an welchem der Lichtleiter, beispielsweise mit der Vorderseite der Mantelfläche 5, anliegt.

Die Abschlussscheibe 9 kann einen für das Licht des ersten Leuchtmittels L1 und des zweiten Leuchtmittels L2 transparent Bereich aufweisen, welcher von einem für das Licht des ersten Leuchtmittels L1 und des zweiten Leuchtmittels L2 intransparenten Bereich umgeben ist. Die Abschlussscheibe 9 kann zu dem Lichtleitkanalelement 6 und dem Lichtleiter 4 derart angeordnet sein, dass Licht, welches aus dem Lichtauskoppelabschnitt 4c des Lichtleiters 4 auskoppelt, bevorzugt ausschließlich, durch den transparenten Bereich der Abschlussscheibe 9 durchtritt.

Das Lichtleitkanalelement 6 kann einen Befestigungsabschnitt 6a aufweisen, an welchem der Lichtleiter 4 befestigt ist.

In dem gezeigten Ausführungsbeispiel ist der Befestigungsabschnitt 6a grabenförmig oder, in einem Schnitt durch die Ebene E2, trapezförmig ausgestaltet. Der Befestigungsabschnitt 6a endet an der Abschlussscheibe 9, wodurch der Lichtleiter 4 von der Abschlussscheibe 9 und dem Befestigungsabschnitt 6a in Position gehalten bzw. entlang der Richtung R2 und entlang der Richtung z befestigt. In dem gezeigten Ausführungsbeispiel sind, in der Ebene E2, der Lichtleitkanal 7 und der daran anschließende Befestigungsabschnitt 6a doppeltrichterförmig oder Sanduhrförmig ausgestaltet.

### LISTE DER BEZUGSZEICHEN

- 1: Beleuchtungssystem
- 2: Lichtquellen
- 3: Lichtquellenträger
- 4: Lichtleiter
- 4a: erster Lichteinkoppelabschnitt
- 4b: zweiter Lichteinkoppelabschnitt
- 4c: Lichtauskoppelabschnitt
- 5: Mantelfläche
- 6: Lichtleitkanalelement
- 6a: Befestigungsabschnitt
- 7: Lichtleitkanal
- 7a: Lichteintrittsbereich eines Lichtleitkanals
- 7b: Lichtaustrittsbereich eines Lichtleitkanals
- 8: Wandung
- 8a, 8b: erstes Seitenflächenpaar
- 8c, 8d: zweites Seitenflächenpaar
- 9: Abschlussscheibe
- 9a: Halteabschnitt der Abschlussscheibe
- E1: erste Ebene
- E2: zweite Ebene
- L1: erstes Leuchtmittel
- L2: zweites Leuchtmittel
- R1: erste Lichtabstrahlrichtung
- R2: zweite Lichtabstrahlrichtung
- X: axiale Längsausdehnung
- Z: radiale Richtung

## Patentansprüche

1. Beleuchtungssystem (1) für eine Fahrzeugleuchte, insbesondere für einen Kraftfahrzeugscheinwerfer, umfassend:
ein erstes Leuchtmittel (L1), welches dazu eingerichtet ist, Licht entlang einer ersten Lichtabstrahlrichtung (R1) abzustrahlen,
ein zweites Leuchtmittel (L2), umfassend eine Vielzahl von einzeln ansteuerbaren Lichtquellen (2), wobei die einzelnen Lichtquellen (2) an einem Lichtquellenträger (3) des zweiten Leuchtmittels (L2) beanstandet zueinander angeordnet und dazu eingerichtet sind, Licht entlang einer zweiten Lichtabstrahlrichtung (R2), welche von der ersten Lichtabstrahlrichtung (R1) unterschiedlich ist, abzustrahlen,
einen Lichtleiter (4), insbesondere eine Lichtleitfaser, welcher entlang der zweiten Lichtabstrahlrichtung (R2) nach dem zweiten Leuchtmittel (L2) angeordnet ist, wobei der Lichtleiter (4) einen ersten Lichteinkoppelabschnitt (4a) aufweist, von welchem sich eine den Lichtleiter begrenzende Mantelfläche (5) entlang einer axialen Längsausdehnung (x) des Lichtleiters (4) wegerstreckt, wobei eine Rückseite der Mantelfläche (5) als zweiter Lichteinkoppelabschnitt (4b) und eine der Rückseite gegenüberliegende Vorderseite der Mantelfläche (5) als Lichtauskoppelabschnitt (4c) ausgestaltet ist,
wobei der Lichtleiter (4) zu dem ersten Leuchtmittel (L1) derart angeordnet ist, dass von dem ersten Leuchtmittel (L1) abgestrahltes Licht über den ersten Lichteinkoppelabschnitt (4a) in den Lichtleiter (4) einkoppelt, wobei sich von dem ersten Leuchtmittel (L1) eingekoppeltes Licht innerhalb der Mantelfläche (5), insbesondere zumindest abschnittsweise, entlang der Längsausdehnung (x) des Lichtleiters (4) axial ausbreitet, wobei der Lichtleiter (4) derart ausgestaltet ist, dass über den ersten Lichteinkoppelabschnitt (4a) eingekoppeltes Licht über den Lichtauskoppelabschnitt (4c) des Lichtleiters (4) entlang der zweiten Lichtabstrahlrichtung (R2) ausgekoppelt wird, wobei der Lichtauskoppelabschnitt (4c), insbesondere die gesamte Vorderseite der Mantelfläche (5) und/oder die gesamte Rückseite der Mantelfläche (5), diffus streuend ausgebildet ist,
wobei der Lichtleiter (4) zu dem zweiten Leuchtmittel (L2) derart angeordnet ist, dass die Längsausdehnung (x) des Lichtleiters (4) im Wesentlichen orthogonal zur zweiten Lichtabstrahlrichtung (R2) orientiert ist, der zweite Lichteinkoppelabschnitt (4b) der Mantelfläche (5) dem zweiten Leuchtmittel (L2) zugewandt und der Lichtauskoppelabschnitt (4c) der Mantelfläche (5) dem zweiten Leuchtmittel (L2) abgewandt ist, wobei
das Beleuchtungssystem (1) ein Lichtleitkanalelement (6) aufweist, welches zwischen dem zweiten Leuchtmittel (L2) und der Rückseite der Mantelfläche (5) angeordnet ist, wobei das Lichtleitkanalelement (6) eine Vielzahl von nebeneinander angeordneten Lichtleitkanälen (7) aufweist, welche an dem zweiten Lichteinkoppelabschnitt (4b) der Mantelfläche (5) münden,
**dadurch gekennzeichnet, dass**
jeder Lichtquelle (2) des zweiten Leuchtmittels (L2) ein Lichtleitkanal (7) derart zugeordnet ist, dass Licht einer Lichtquelle (2) über einen Lichteintrittsbereich (7a) des der Lichtquelle (2) zugeordneten Lichtleitkanals (7) in diesen eintritt und über einen Lichtaustrittsbereich (7b) des Lichtleitkanals (7) aus dem Lichtleitkanal (7) austritt, wobei das Lichtleitkanalelement (6) zu der Rückseite der Mantelfläche (5) derart angeordnet ist, dass jedem Lichtaustrittsbereich (7b) ein Teilbereich des zweiten Lichteinkoppelabschnitts (4b) zugeordnet ist, sodass Licht, welches aus einem Lichtaustrittsbereich (7b) eines bestimmten Lichtleitkanals (7) austritt, auf jenen Teilbereich des zweiten Lichteinkoppelabschnitts (4b) trifft, welcher dem Lichtaustrittsbereich (7b) des entsprechenden Lichtleitkanals (7) zugeordnet ist,
wobei über die Teilbereiche des zweiten Lichteinkoppelabschnitts (4b) eingekoppeltes Licht radial durch den Lichtleiter (4) durchtritt und über den Lichtauskoppelabschnitt (4c) des Lichtleiters (4) entlang der zweiten Lichtabstrahlrichtung (R2) auskoppelt,
wobei jeder Lichtleitkanal (7) aus einer den Lichtleitkanal (7) begrenzenden Wandung (8) gebildet ist, welche sich zwischen dem Lichteintrittsbereich (7a) und dem Lichtaustrittsbereich (7b) entlang der zweiten Lichtabstrahlrichtung (R2), vorzugweise trichterförmig, erstreckt, wobei die Wandung (8) Seitenflächen (8a, 8b, 8c, 8d) aufweist, welche derart ausgestaltet sind, dass ein von einer Lichtquelle (2) des zweiten Leuchtmittels (L2) in den Lichtleitkanal (7) eintretendes Lichtbündel, durch Reflexion oder Streuung an Seitenflächen (8a, 8b), in einer ersten, horizontalen Ebene (E1), welche parallel zur axialen Längsausdehnung (x) des Lichtleiters (4) orientiert ist, am Lichtaustrittsbereich (7b) breiter ist als am Lichteintrittsbereich (7a),
und, dass ein von einer Lichtquelle (2) des zweiten Leuchtmittels (L2) in den Lichtleitkanal (7) eintretendes Lichtbündel, durch Reflexion oder Streuung an Seitenflächen (8c, 8d), in einer zweiten Ebene (E2), welche orthogonal zur ersten Ebene (E1) und orthogonal zur axialen Längsausdehnung (x) des Lichtleiters (4) orientiert ist, am Lichtaustrittsbereich (7b) schmäler ist als am Lichteintrittsbereich (7a).

2. Beleuchtungssystem nach Anspruch 1, wobei die Wandung (8) zumindest vier Seitenflächen (8a, 8b, 8c, 8d) aufweist, wobei sich jeweils zwei Seitenflächen paarweise gegenüberliegen, wobei ein erstes Seitenflächenpaar, welches aus zwei Seitenflächen (8a, 8b) gebildet ist, welche entlang der axialen Längsausdehnung (x) des Lichtleiters (4) beabstandet zueinander angeordnet sind, entlang der zweiten Lichtausbreitungsrichtung (R2) divergierend auseinander verlaufen, wobei ein zweites Seitenflächenpaar, welches aus zwei Seitenflächen (8c, 8d) gebildet ist, welche entlang einer zur axialen Längsausdehnung (x) orthogonalen radialen Richtung (z) des Lichtleiters (4) beabstandet zueinander angeordnet sind, entlang der zweiten Lichtausbreitungsrichtung (R2) konvergierend zueinander verlaufen.

3. Beleuchtungssystem nach einem der vorhergehenden Ansprüche, wobei das Beleuchtungssystem eine Abschlussscheibe (9) aufweist, welche entlang der zweiten Lichtabstrahlrichtung (R2) nach dem Lichtleitkanalelement (6) und vorzugsweise nach dem Lichtleiter (4) angeordnet ist, wobei bevorzugt die Abschlussscheibe (9) einen Halteabschnitt (9a) aufweist, an welchem der Lichtleiter (4) befestigt ist.

4. Beleuchtungssystem nach einem der vorhergehenden Ansprüche, wobei das Beleuchtungssystem eine Abschlussscheibe (9) aufweist, welche entlang der zweiten Lichtabstrahlrichtung (R2) nach dem Lichtleitkanalelement (6) und vorzugsweise nach dem Lichtleiter (4) angeordnet ist, wobei die Abschlussscheibe (9) einen für das Licht des ersten Leuchtmittels (L1) und des zweiten Leuchtmittels (L2) transparenten Bereich aufweist, welcher von einem für das Licht des ersten Leuchtmittels (L1) und des zweiten Leuchtmittels (L2) intransparenten Bereich umgeben ist, wobei die Abschlussscheibe (9) zu dem Lichtleitkanalelement (6) und dem Lichtleiter (4) derart angeordnet ist, dass Licht, welches aus dem Lichtauskoppelabschnitt (4c) des Lichtleiters (4) auskoppelt, bevorzugt ausschließlich, durch den transparenten Bereich der Abschlussscheibe (9) durchtritt.

5. Beleuchtungssystem nach einem der vorhergehenden Ansprüche, wobei die Lichtquellen (2) an dem Lichtquellenträger (3) entlang einer imaginären Linie angeordnet sind und damit eine Lichtquellen-Reihe ausbilden, wobei vorzugsweise die Lichtquellen-Reihe der axialen Längsausdehnung (x) des Lichtleiters (4) folgt.

6. Beleuchtungssystem nach einem der vorhergehenden Ansprüche, wobei der Lichtleiter (4) im Wesentlichen zylinderförmig ausgestaltet ist, wobei der erste Lichteinkoppelabschnitt (4a) an einer Grundfläche des zylinderförmigen Lichtleiters und der zweite Lichteinkoppelabschnitt (4b) und der Lichtauskoppelabschnitt (4c) an einem Zylindermantel, insbesondere an gegenüberliegenden Seiten eines Zylindermantels, des zylinderförmigen Lichtleiters (4) ausgebildet ist.

7. Beleuchtungssystem nach einem der vorhergehenden Ansprüche, wobei der Lichtleiter (4) und das erste Leuchtmittel (L1) dazu eingerichtet sind, ein Tagfahrlicht zu erzeugen, wobei vorzugsweise der Lichtleiter (4) und die Vielzahl der Lichtquellen (2) des zweiten Leuchtmittels (L2) dazu eingerichtet sind, ein, insbesondere dynamisches, Signallicht, beispielsweise einen Fahrrichtungsanzeiger oder ein Blinklicht mit einen Lauflichteffekt, zu erzeugen.

8. Beleuchtungssystem nach einem der vorhergehenden Ansprüche, wobei sich Licht, welches von dem ersten Leuchtmittel (L1) in den Lichtleiter (4) eingekoppelt wird, innerhalb des Lichtleiters (4) mittels Totalreflexion an der Mantelfläche (5) entlang der Längsausdehnung (x) des Lichtleiters (4) ausbreitet.

9. Beleuchtungssystem nach einem der vorhergehenden Ansprüche, wobei das erste Leuchtmittel (L1) zu dem zweiten Leuchtmittel (L2) derart angeordnet ist, dass die erste Lichtabstrahlrichtung (R1) orthogonal zur zweiten Lichtabstrahlrichtung (R2) orientiert ist.

10. Beleuchtungssystem nach einem der vorhergehenden Ansprüche, wobei das Lichtleitkanalelement (6) derart ausgestaltet ist, dass aus den Lichtleitkanälen (7) ausgekoppeltes Licht den gesamten zweiten Lichteinkoppelbereich (4b) der Mantelfläche (5) beleuchtet, wobei vorzugsweise das Lichtleitkanalelement (6) als Lichtleit-Blende ausgestaltet ist.

11. Beleuchtungssystem nach einem der vorhergehenden Ansprüche, wobei das erste Seitenflächenpaar (8a, 8b) und/oder das zweite Seitenflächenpaar (8c, 8d) eine für Licht des zweiten Leuchtmittels (L2) diffus streuend ausgebildete Oberfläche aufweisen, wobei vorzugsweise das erste Seitenflächenpaar (8a, 8b) und/oder das zweite Seitenflächenpaar (8c, 8d) eine diffus streuende Beschichtung und/oder weiß-matt bzw. weiß-opak ausgestaltet ist, oder, wobei das erste Seitenflächenpaar (8a, 8b) und/oder das zweite Seitenflächenpaar (8c, 8d) für Licht des zweiten Leuchtmittels (L2), bevorzugt diffus, reflektierend ausgestaltet ist, und insbesondere eine, bevorzugt diffus, reflektierende Beschichtung, beispielsweise eine metallische Beschichtung, aufweist.

12. Beleuchtungssystem nach einem der vorhergehenden Ansprüche, wobei das Lichtleitkanalelement (6) derart ausgestaltet ist, dass Licht, welches aus zwei benachbarten Lichtleitkanälen (7) ausgekoppelt wird, an dem zweiten Lichteinkoppelabschnitt (4b) überlappungsfrei auftrifft, wobei vorzugsweise über die Teilbereiche des zweiten Lichteinkoppelabschnitts (7b) eingekoppeltes Licht des zweiten Leuchtmittels (L2) sich mit jenem Licht, welches von dem ersten Leuchtmittel (L1) über den ersten Lichteinkoppelbereich (4a) in den Lichtleiter (4) axial eingekoppelt wird, nach dem Auskoppeln über den Lichtauskoppelabschnitt (4c) entlang der zweiten Lichtabstrahlrichtung (R2) überlagert.

13. Beleuchtungssystem nach einem der vorhergehenden Ansprüche, wobei das Lichtleitkanalelement (6) einen Befestigungsabschnitt (6a) aufweist, an welchem der Lichtleiter (4) befestigt ist.

14. Beleuchtungssystem nach einem der vorhergehenden Ansprüche, wobei die einen Lichtleitkanal (7) begrenzende Wandung (8) einen Hohlraum begrenzt, durch welchen das Licht der dem Lichtleitkanal (7) zugeordneten Lichtquelle (2) durchtritt, wobei vorzugsweise der Hohlraum frei von optisch aktiven Elementen, beispielsweise eine oder mehrere Linsen, Lichtleitfasern oder Lichtleitoptiken, ist.

15. Fahrzeugleuchte, insbesondere Kraftfahrzeugscheinwerfer, umfassend ein Beleuchtungssystem nach einem der vorhergehenden Ansprüche.

## Claims

1. Lighting system (1) for a vehicle light, in particular for a motor vehicle headlight, comprising:
a first light source (L1) configured to emit light along a first light emission direction (R1),
a second light source (L2) comprising a plurality of individually controllable light sources (2), wherein the individual light sources (2) are arranged on a light source carrier (3) of the second light source (L2) in a spaced-apart manner relative to one another and are configured to emit light along a second light emission direction (R2), which differs from the first light emission direction (R1),
a light guide (4), in particular an optical fiber, which is arranged along the second light emission direction (R2) downstream of the second light source (L2), wherein the light guide (4) has a first light-coupling section (4a) from which a jacket surface (5) delimiting the light guide extends along an axial longitudinal dimension (x) of the light guide (4), wherein a rear side of the outer surface (5) is configured as a second light-coupling section (4b) and a front side of the outer surface (5) opposite the rear side is configured as a light-coupling section (4c),
wherein the light guide (4) is arranged relative to the first light source (L1) such that light emitted by the first light source (L1) is coupled into the light guide (4) via the first light-coupling section (4a), wherein light coupled in from the first light source (L1) propagates within the outer surface (5), in particular at least in sections, propagates axially along the longitudinal extent (x) of the light guide (4), wherein the light guide (4) is configured such that light coupled in via the first light-coupling section (4a) is coupled out via the light-coupling section (4c) of the light guide (4) along the second light emission direction (R2), wherein the light-coupling section (4c), in particular the entire front side of the jacket surface (5) and/or the entire back side of the jacket surface (5), is designed to scatter light diffusely,
wherein the light guide (4) is arranged relative to the second light source (L2) such that the longitudinal dimension (x) of the light guide (4) is oriented substantially orthogonal to the second light emission direction (R2), the second light-coupling section (4b) of the outer surface (5) faces the second light source (L2), and the light-coupling section (4c) of the outer surface (5) is turned away from the second light source (L2),
wherein
the lighting system (1) comprises a light-guiding channel element (6) arranged between the second light source (L2) and the rear side of the outer surface (5), wherein the light-guiding channel element (6) comprises a plurality of light-guiding channels (7) arranged side by side, which open into the second light-coupling section (4b) of the outer surface (5),
**characterized in that**
each light source (2) of the second light source (L2) is assigned a light-guiding channel (7) such that light from a light source (2) enters the light-guiding channel (7) via a light-entry region (7a) of the light-guiding channel assigned to the light source (2) (7) and exits the light-guiding channel (7) via a light-exit region (7b) of the light-guiding channel (7), wherein the light-guiding channel element (6) is arranged relative to the rear side of the outer surface (5) such that each light-exit region (7b) is associated with a subregion of the second light-coupling section (4b) is assigned, so that light emerging from a light-exit region (7b) of a specific light-guiding channel (7) strikes that subregion of the second light-coupling section (4b) which is assigned to the light-exit region (7b) of the corresponding light-guiding channel (7),
wherein light coupled in via the sub-regions of the second light-coupling section (4b) passes radially through the optical fiber (4) and is coupled out via the light-coupling section (4c) of the optical fiber (4) along the second light-emitting direction (R2),
wherein each light-guiding channel (7) is formed by a wall (8) defining the light-guiding channel (7), which extends between the light-entry region (7a) and the light-exit region (7b) along the second light-emitting direction (R2), preferably in a funnel-shaped configuration, wherein the wall (8) having side surfaces (8a, 8b, 8c, 8d) configured such that a light beam entering the light-guiding channel (7) from a light source (2) of the second light source (L2) is reflected or scattered by the side surfaces (8a, 8b), in a first, horizontal plane (E1) oriented parallel to the axial longitudinal extension (x) of the light guide (4), is wider at the light exit region (7b) than at the light entry region (7a),
and that a light beam entering the light-guiding channel (7) from a light source (2) of the second light source (L2), by reflection or scattering at side surfaces (8c, 8d), in a second plane (E2) oriented orthogonal to the first plane (E1) and orthogonal to the axial length (x) of the light guide (4), is narrower at the light exit region (7b) than at the light entry region (7a).

2. Lighting system according to claim 1, wherein the wall (8) comprises at least four side surfaces (8a, 8b, 8c, 8d), wherein two side surfaces are oppositely positioned in pairs, wherein a first pair of side surfaces, consisting of two side surfaces (8a, 8b) spaced apart from one another along the axial longitudinal extension (x) of the light guide (4), diverge from one another along the second light propagation direction (R2), wherein a second pair of side surfaces, formed by two side surfaces (8c, 8d) which are arranged at a distance from one another along a radial direction (z) of the light guide (4) orthogonal to the axial longitudinal extension (x), diverge from one another along the second light propagation direction (R2).

3. Lighting system according to any one of the preceding claims, wherein the lighting system comprises an end plate (9) which is arranged along the second light propagation direction (R2) downstream of the light-guiding channel element (6) and preferably downstream of the light guide (4), wherein the end plate (9) preferably comprises a retaining portion (9a) to which the light guide (4) is attached.

4. Lighting system according to any one of the preceding claims, wherein the lighting system comprises a cover plate (9) arranged along the second light-emitting direction (R2) downstream of the light-guiding channel element (6) and preferably downstream of the light guide (4), wherein the cover plate (9) comprises a region transparent to the light of the first light source (L1) and the second light source (L2), which is surrounded by a region opaque to the light of the first light source (L1) and the second light source (L2), wherein the end plate (9) is arranged relative to the light-guiding channel element (6) and the light guide (4) such that light which is coupled out of the light-coupling section (4c) of the light guide (4) passes preferentially exclusively through the transparent region of the end plate (9).

5. Lighting system according to one of the preceding claims, wherein the light sources (2) are arranged on the light source carrier (3) along an imaginary line and thereby form a row of light sources, wherein the row of light sources preferably follows the axial longitudinal extension (x) of the light guide (4).

6. Lighting system according to any one of the preceding claims, wherein the light guide (4) is substantially cylindrical in shape, wherein the first light-coupling section (4a) is located at a base of the cylindrical light guide and the second light-coupling section (4b) and the light-coupling-out section (4c) are formed on a cylindrical surface, in particular on opposite sides of a cylindrical surface, of the cylindrical light guide (4).

7. Lighting system according to any one of the preceding claims, wherein the light guide (4) and the first light source (L1) are configured to generate a daytime running light, wherein preferably the light guide (4) and the plurality of light sources (2) of the second light source (L2) are configured to generate a signal light, in particular a dynamic one, such as a direction indicator or a flashing light with a running light effect.

8. Lighting system according to any one of the preceding claims, wherein light coupled into the light guide (4) by the first light source (L1) propagates within the light guide (4) by means of total internal reflection at the outer surface (5) along the longitudinal extent (x) of the light guide (4).

9. Lighting system according to any of the preceding claims, wherein the first light source (L1) is arranged relative to the second light source (L2) such that the first light emission direction (R1) is oriented orthogonally to the second light emission direction (R2).

10. Lighting system according to one of the preceding claims, wherein the light-guiding channel element (6) is configured such that light coupled out of the light-guiding channels (7) illuminates the entire second light-coupling area (4b) of the outer surface (5), wherein the light-guiding channel element (6) is preferably configured as a light-guiding aperture.

11. Lighting system according to one of the preceding claims, wherein the first pair of side surfaces (8a, 8b) and/or the second pair of side surfaces (8c, 8d) have a surface designed to diffusely scatter light from the second light source (L2), wherein preferably the first pair of side surfaces (8a, 8b) and/or the second pair of side surfaces (8c, 8d) is designed with a diffusely scattering coating and/or is white-matte or white-opaque, or wherein the first pair of side surfaces (8a, 8b) and/or the second pair of side surfaces (8c, 8d) is designed to reflect light from the second light source (L2), preferably diffusely, and in particular has a, preferably diffusely, reflective coating, for example a metallic coating.

12. Lighting system according to one of the preceding claims, wherein the light-guiding channel element (6) is configured such that light decoupled from two adjacent light-guiding channels (7) strikes the second light-coupling section (4b) without overlap, wherein the light is superimposed with the light that is axially coupled into the light guide (4) from the first light source (L1) via the first light-coupling region (4a) after being decoupled via the light-decoupling section (4c) along the second light-emitting direction (R2).

13. Lighting system according to one of the preceding claims, wherein the light-guiding channel element (6) comprises a mounting section (6a) to which the light guide (4) is attached.

14. Lighting system according to one of the preceding claims, wherein the wall (8) delimiting a light-guiding channel (7) delimits a cavity through which the light from the light source (2) associated with the light-guiding channel (7) passes, wherein the cavity is preferably free of optically active elements, such as one or more lenses, optical fibers, or optical components.

15. Vehicle light, in particular a motor vehicle headlight, comprising a lighting system according to one of the preceding claims.

## Revendications

1. Système d'éclairage (1) pour un feu de véhicule, en particulier pour un phare de véhicule automobile, comprenant :
une première source lumineuse (L1) qui est conçue pour émettre de la lumière selon une première direction de rayonnement lumineux (R1),
une deuxième source lumineuse (L2) comprenant une pluralité de sources lumineuses (2) pouvant être commandées individuellement, les différentes sources lumineuses (2) étant disposées de manière espacée les unes par rapport aux autres sur un support de sources lumineuses (3) de la deuxième source lumineuse (L2) et étant agencées pour émettre de la lumière selon une deuxième direction d'émission lumineuse (R2), qui diffère de la première direction d'émission lumineuse (R1),
un guide de lumière (4), en particulier une fibre optique, qui est disposée le long de la deuxième direction d'émission de lumière (R2) en aval du deuxième moyen d'éclairage (L2), le guide de lumière (4) présentant une première section d'injection de lumière (4a) à partir de laquelle s'étend une surface d'enveloppe (5) délimitant le guide de lumière le long d'une extension longitudinale axiale (x) du guide de lumière (4), une face arrière de la surface d'enveloppe (5) étant configurée comme une deuxième section d'injection de lumière (4b) et une face avant de la surface d'enveloppe (5), opposée à la face arrière, étant configurée comme une section d'extraction de lumière (4c),
le guide de lumière (4) étant disposé par rapport à la première source lumineuse (L1) de telle sorte que la lumière émise par la première source lumineuse (L1) soit injectée dans le guide de lumière (4) par l'intermédiaire de la première section d'injection de lumière (4a), la lumière injectée à partir de la première source lumineuse (L1) se propageant à l'intérieur de la surface de l'enveloppe (5), en particulier au moins par sections, se propage axialement le long de l'étendue longitudinale (x) du guide de lumière (4), le guide de lumière (4) étant conçu de telle sorte que la lumière injectée par la première section d'injection de lumière (4a) soit extraite par la section d'extraction de lumière (4c) du guide de lumière (4) le long de la deuxième direction de rayonnement lumineux (R2), la section de découplage de lumière (4c), en particulier toute la face avant de la surface d'enveloppe (5) et/ou toute la face arrière de la surface d'enveloppe (5), est conçue pour diffuser la lumière de manière diffuse,
le guide de lumière (4) étant disposé par rapport à la deuxième source lumineuse (L2) de telle sorte que l'étendue longitudinale (x) du guide de lumière (4) est orientée essentiellement orthogonalement à la deuxième direction de rayonnement lumineux (R2), la deuxième section de couplage de lumière (4b) de la surface d'enveloppe (5) est tournée vers la deuxième source lumineuse (L2) et la section de découplage de lumière (4c) de la surface d'enveloppe (5) est détournée de la deuxième source lumineuse (L2),
dans lequel
le système d'éclairage (1) comprend un élément à canaux de guidage de lumière (6) qui est disposé entre la deuxième source lumineuse (L2) et la face arrière de la surface d'enveloppe (5), l'élément à canaux de guidage de lumière (6) comportant une pluralité de canaux de guidage de lumière (7) disposés côte à côte, qui débouchent au niveau de la deuxième section d'injection de lumière (4b) de la surface d'enveloppe (5),
**caractérisé en ce que**
chaque source lumineuse (2) de la deuxième source lumineuse (L2) est associée à un canal de guidage de lumière (7) de telle sorte que la lumière d'une source lumineuse (2) pénètre dans ce canal de guidage de lumière via une zone d'entrée de lumière (7a) du canal de guidage de lumière associé à la source lumineuse (2) (7) et sorte du canal de guidage de lumière (7) par une zone de sortie de lumière (7b) de ce canal de guidage de lumière (7), l'élément de canal de guidage de lumière (6) étant disposé par rapport à la face arrière de la surface d'enveloppe (5) de telle sorte qu'à chaque zone de sortie de lumière (7b) soit associée une sous-zone de la deuxième section d'injection de lumière (4b) est associée, de sorte que la lumière sortant d'une zone de sortie de lumière (7b) d'un canal de guidage de lumière (7) donné frappe la partie de la deuxième section d'injection de lumière (4b) qui est associée à la zone de sortie de lumière (7b) du canal de guidage de lumière (7) correspondant,
la lumière injectée par l'intermédiaire des sous-zones de la deuxième section d'injection de lumière (4b) traversant radialement le guide de lumière (4) et étant extraite par l'intermédiaire de la section d'extraction de lumière (4c) du guide de lumière (4) le long de la deuxième direction de rayonnement de lumière (R2),
chaque canal de guidage de lumière (7) étant formé par une paroi (8) qui délimite ledit canal de guidage de lumière (7) et qui s'étend entre la zone d'entrée de la lumière (7a) et la zone de sortie de la lumière (7b) le long de la deuxième direction de rayonnement lumineux (R2), de préférence en forme d'entonnoir, la paroi (8) présentant des faces latérales (8a, 8b, 8c, 8d) qui sont conçues de telle sorte qu'un faisceau lumineux entrant dans le canal de guidage de lumière (7) à partir d'une source lumineuse (2) du deuxième moyen d'éclairage (L2) soit guidé, par réflexion ou diffusion sur les faces latérales (8a, 8b), dans un premier plan horizontal (E1) orienté parallèlement à l'étendue longitudinale axiale (x) du guide de lumière (4), soit plus large au niveau de la zone de sortie de la lumière (7b) qu'au niveau de la zone d'entrée de la lumière (7a),
et **en ce qu'**un faisceau lumineux entrant dans le canal de guidage de lumière (7) à partir d'une source lumineuse (2) de la deuxième source lumineuse (L2), par réflexion ou diffusion sur les faces latérales (8c, 8d), dans un deuxième plan (E2) qui est orthogonal au premier plan (E1) et orthogonal à l'étendue longitudinale axiale (x) du guide de lumière (4), est plus étroit au niveau de la zone de sortie de lumière (7b) qu'au niveau de la zone d'entrée de lumière (7a).

2. Système d'éclairage selon la revendication 1, dans lequel la paroi (8) comporte au moins quatre faces latérales (8a, 8b, 8c, 8d), deux faces latérales se faisant face par paires, une première paire de faces latérales, formée de deux faces latérales (8a, 8b) espacées l'une de l'autre le long de l'étendue longitudinale axiale (x) du guide de lumière (4), s'écartent de manière divergente le long de la deuxième direction de propagation de la lumière (R2), une deuxième paire de faces latérales, formée de deux faces latérales (8c, 8d) qui sont espacées l'une de l'autre le long d'une direction radiale (z) du guide de lumière (4) orthogonale à l'extension longitudinale axiale (x), s'écartent de manière convergente l'une de l'autre le long de la deuxième direction de propagation de la lumière (R2).

3. Système d'éclairage selon l'une des revendications précédentes, le système d'éclairage comportant une vitre d'extrémité (9) qui est disposée le long de la deuxième direction de rayonnement lumineux (R2) en aval de l'élément de canal de guidage de lumière (6) et de préférence en aval du guide de lumière (4), la vitre de fermeture (9) comportant de préférence une partie de fixation (9a) à laquelle le guide de lumière (4) est fixé.

4. Système d'éclairage selon l'une des revendications précédentes, le système d'éclairage comportant une vitre de fermeture (9) qui est disposée le long de la deuxième direction de rayonnement lumineux (R2) en aval de l'élément de canal de guidage de lumière (6) et de préférence en aval du guide de lumière (4), la vitre de fermeture (9) comportant une zone transparente à la lumière de la première source lumineuse (L1) et de la deuxième source lumineuse (L2), laquelle est entourée d'une zone opaque à la lumière de la première source lumineuse (L1) et de la deuxième source lumineuse (L2), la vitre de fermeture (9) étant disposée par rapport à l'élément de canal de guidage de lumière (6) et le guide de lumière (4) de telle sorte que la lumière qui est couplée hors de la section de découplage de lumière (4c) du guide de lumière (4) traverse de préférence exclusivement la zone transparente de la vitre d'extrémité (9).

5. Système d'éclairage selon l'une des revendications précédentes, dans lequel les sources lumineuses (2) sont disposées sur le support de sources lumineuses (3) le long d'une ligne imaginaire et forment ainsi une rangée de sources lumineuses, la rangée de sources lumineuses suivant de préférence l'étendue longitudinale axiale (x) du guide de lumière (4).

6. Système d'éclairage selon l'une des revendications précédentes, dans lequel le guide de lumière (4) est de forme essentiellement cylindrique, la première section d'injection de lumière (4a) étant disposée sur une face de base du guide de lumière cylindrique et la deuxième section d'injection de lumière (4b) et la section de couplage de lumière (4c) étant formées sur une enveloppe cylindrique, en particulier sur des côtés opposés d'une enveloppe cylindrique, du guide de lumière de forme cylindrique (4).

7. Système d'éclairage selon l'une des revendications précédentes, dans lequel le guide de lumière (4) et le premier moyen d'éclairage (L1) sont agencés pour produire un feu de jour, le guide de lumière (4) et la pluralité de sources lumineuses (2) du deuxième moyen d'éclairage (L2) étant de préférence agencés pour produire un feu de signalisation, en particulier dynamique, par exemple un indicateur de direction ou un feu clignotant avec un effet de lumière défilante.

8. Système d'éclairage selon l'une des revendications précédentes, dans lequel la lumière couplée par le premier moyen d'éclairage (L1) dans le guide de lumière (4) se propage à l'intérieur du guide de lumière (4) par réflexion totale sur la surface de l'enveloppe (5) le long de l'étendue longitudinale (x) du guide de lumière (4).

9. Système d'éclairage selon l'une des revendications précédentes, dans lequel la première source lumineuse (L1) est disposée par rapport à la deuxième source lumineuse (L2) de telle sorte que la première direction d'émission de lumière (R1) soit orientée orthogonalement à la deuxième direction d'émission de lumière (R2).

10. Système d'éclairage selon l'une des revendications précédentes, dans lequel l'élément à canaux de guidage de lumière (6) est conçu de telle sorte que la lumière découplée des canaux de guidage de lumière (7) éclaire l'ensemble de la deuxième zone de couplage de lumière (4b) de la surface d'enveloppe (5), l'élément à canaux de guidage de lumière (6) étant de préférence conçu comme un cache de guidage de lumière.

11. Système d'éclairage selon l'une des revendications précédentes, dans lequel la première paire de surfaces latérales (8a, 8b) et/ou la deuxième paire de surfaces latérales (8c, 8d) présentent une surface conçue pour diffuser de manière diffuse la lumière de la deuxième source lumineuse (L2), la première paire de surfaces latérales (8a, 8b) et/ou la deuxième paire de surfaces latérales (8c, 8d) étant pourvue d'un revêtement diffusant la lumière et/ou étant de couleur blanc mat ou blanc opaque, ou bien la première paire de surfaces latérales (8a, 8b) et/ou la deuxième paire de surfaces latérales (8c, 8d) est conçue pour la lumière de la deuxième source lumineuse (L2) de manière réfléchissante, de préférence de façon diffuse, et comporte en particulier un revêtement réfléchissant, de préférence de façon diffuse, par exemple un revêtement métallique.

12. Système d'éclairage selon l'une des revendications précédentes, dans lequel l'élément à canaux de guidage de lumière (6) est conçu de telle sorte que la lumière découplée de deux canaux de guidage de lumière adjacents (7) frappe la deuxième section d'injection de lumière (4b) sans chevauchement, la lumière injectée de préférence par les sous-zones de la deuxième section d'injection de lumière (7b) se superpose à la lumière qui est injectée axialement dans le guide de lumière (4) par la première source lumineuse (L1) via la première zone d'injection de lumière (4a), après avoir été extraite via la section d'extraction de lumière (4c) le long de la deuxième direction de rayonnement de lumière (R2).

13. Système d'éclairage selon l'une des revendications précédentes, dans lequel l'élément de canal de guidage de lumière (6) comporte une partie de fixation (6a) à laquelle le guide de lumière (4) est fixé.

14. Système d'éclairage selon l'une des revendications précédentes, dans lequel la paroi (8) délimitant un canal de guidage de lumière (7) délimite une cavité à travers laquelle passe la lumière de la source lumineuse (2) associée au canal de guidage de lumière (7), la cavité étant de préférence exempte d'éléments optiquement actifs, par exemple une ou plusieurs lentilles, de fibres optiques ou d'optiques de guidage de lumière.

15. Projecteur de véhicule, en particulier phare de véhicule automobile, comprenant un système d'éclairage selon l'une des revendications précédentes.
